# EUROPEAN PATENT APPLICATION

(11) **EP 4 528 339 A1**
(43) Date of publication of application: **26.03.2025**
(21) Application number: 23903488.7
(22) Date of filing: 12.12.2023
(51) Int. Cl.: G02B 1/111, B32B 7/023, B32B 27/16, B32B 27/18, B32B 27/20, B32B 27/30, G02B 1/14, G02B 1/18

(54) **ANTIREFLECTION FILM**

(30) Priority: 13.12.2022 JP 2022198542
(71) Applicant: Higashiyama Film Co., Ltd., Nagoya-shi, Aichi 450-0002 (JP)
(72) Inventor: KAWAMURA, Shimpei, Mizunami-shi, Gifu 509-6104 (JP); MATSUMOTO, Hironobu, Mizunami-shi, Gifu 509-6104 (JP)
(74) Representative: Horn Kleimann Waitzhofer Schmid-Dreyer Patent- und Rechtsanwälte PartG mbB
(86) International application number: PCT/JP2023/044324
(87) International publication number: WO 2024/128203

(57) **Abstract**

Disclosed is an antireflection film with excellent scratch resistance, as well as high antifouling properties and wear durability. Furthermore, the antireflection film has solvent resistance sufficient to withstand friction with a cloth or fingers wet with solvent such as alcohol. The antireflection film includes a substrate film, a hard coat layer covering a surface of the substrate film, and a low-refractive-index layer covering a surface of the hard coat layer. The low-refractive-index layer includes a cured product of an ionizing radiation curable composition including a (meth)acrylate compound including a reactive group, hollow silica particles, and alumina particles surface-treated with a silane coupling agent including a reactive group capable of bonding to the (meth)acrylate compound, and the antireflection film has a water contact angle of 100° or larger on a surface thereof.

## Description

### TECHNICAL FIELD

The present invention relates to an antireflection film, and more specifically relates to an antireflection film suitably used for a display surface such as a liquid crystal display, an organic EL display, and a touch panel of a smartphone.

### BACKGROUND ART

An antireflection film is sometimes placed on a surface of a display provided on a liquid crystal display, an organic EL display, a touch panel of a smartphone to prevent external light from being reflected by the screen. As antireflection films, a film that includes a hard coat layer and an antireflection layer (i.e., a low-refractive-index layer) in this order on a substrate film is known. For example, Patent Document 1, filed by the present applicant, discloses that antireflection properties, scratch resistance, and antifouling properties of an antireflection film are improved through consideration of a composition of a low-refractive-index layer covering a surface of a hard coat layer. In Patent Document 1, a fluorine-containing compound is contained in the low-refractive-index layer, which contributes to improvement of the antifouling properties.

### CITATION LIST

### Patent Document

Patent Document 1: WO 2021/020504 A

### SUMMARY OF INVENTION

### TECHNICAL PROBLEM

An antireflection film, particularly the one touched frequently by fingers, such as an antireflection film placed on the surface of the touch panel, is required to have high antifouling properties. As disclosed in Patent Document 1, the antifouling properties of the antireflection film can be improved by adding an ingredient having antifouling effects, such as a fluorine-containing compound, to the low-refractive-index layer constituting the antireflection film. In addition, an antifouling layer containing the ingredient having the antifouling effects may be provided as a layer independent from the low-refractive-index layer on the surface of the low-refractive-index layer. However, even if the antifouling layer is provided, the antifouling properties may not be sufficiently high, or the antifouling properties may decrease due to wear of a surface of the antifouling layer as a result of repeated contact with fingers. For the antireflection film that is touched frequently by fingers, it is important that the film has high scratch resistance and high wear durability in addition to having high antireflection and antifouling properties, from the viewpoint of durability during use.

In recent years, the antireflection film, particularly the one touched frequently by fingers, such as an antireflection film placed on the surface of the touch panel, is frequently wiped with solvent such as alcohol for cleaning and sterilization. However, the conventional antireflection film has problems in that the surface thereof can be worn and the antifouling properties are reduced if the surface of the antireflection film is wiped off with a cloth wet with alcohol or repeatedly operated with fingers wet with alcohol.

An objective of the present disclosure is to provide an antireflection film with excellent scratch resistance, as well as high antifouling properties and wear durability, and also having solvent resistance sufficient to withstand friction with a cloth or fingers wet with solvent such as alcohol.

### SOLUTION TO PROBLEM

To achieve the objective, an antireflection film according to the present invention has the following configuration:
[1] A first antireflection film according to the present invention includes a substrate film, a hard coat layer covering a surface of the substrate film, and a low-refractive-index layer covering a surface of the hard coat layer. The low-refractive-index layer contains a cured product of an ionizing radiation curable composition containing a (meth)acrylate compound including a reactive group, hollow silica particles, and alumina particles surface-treated with a silane coupling agent including a reactive group capable of bonding to the (meth)acrylate compound. The antireflection film has a water contact angle of 100° or larger on a surface thereof.
[2] In embodiment [1] mentioned above, it is preferable that the ionizing radiation curable composition further includes a fluorine-containing (meth)acrylate.
[3] A second antireflection film according to the present invention includes a substrate film, a hard coat layer covering a surface of the substrate film, a low-refractive-index layer covering a surface of the hard coat layer, and an antifouling layer covering a surface of the low-refractive-index layer. The low-refractive-index layer contains a cured product of an ionizing radiation curable composition including a (meth)acrylate compound including a reactive group, hollow silica particles, and alumina particles surface-treated with a silane coupling agent including a reactive group capable of bonding to the (meth)acrylate compound. The antifouling layer contains a cured product of an ionizing radiation curable composition containing a fluorine-containing (meth)acrylate The antireflection film has a water contact angle of 100° or larger on a surface thereof.
[4] In embodiment [3] mentioned above, the antifouling layer contains the fluorine-containing (meth)acrylate of 90 mass% or larger of a total solid content of the antifouling layer.
[5] In embodiment [3] or [4] mentioned above, the low-refractive-index layer does not include a fluorine-containing (meth)acrylate.

### ADVANTAGEOUS EFFECT OF INVENTION

The first antireflection film according to the present invention having the structure of embodiment [1] includes the substrate film, the hard coat layer covering the surface of the substrate film, and the low-refractive-index layer covering the surface of the hard coat layer. The low-refractive-index layer contains the cured product of the ionizing radiation curable composition including the (meth)acrylate compound including the reactive group, the hollow silica particles, and the alumina particles surface-treated with the silane coupling agent including the reactive group capable of bonding to the (meth)acrylate compound, and the antireflection film has the water contact angle of 100° or larger on the surface thereof. Since the low-refractive-index layer is formed of the cured product of the composition including not only the (meth)acrylate compound but also the alumina particles surface-treated with the silane coupling agent including the reactive group capable of bonding to the (meth)acrylate compound, the antireflection film has excellent scratch resistance, in addition to high antifouling properties and wear durability. Furthermore, since the antireflection film having the composition has the water contact angle of 100° or larger on the surface thereof, the antireflection film has high antifouling properties and solvent resistance sufficient to withstand the friction with a cloth or fingers wet with solvent such as alcohol.

In embodiment [2] mentioned above, the ionizing radiation curable composition constituting the low-refractive-index layer further contains the fluorine-containing (meth)acrylate. Therefore, the antifouling properties and the solvent resistance of the surface of the antireflection film can be effectively improved.

The second antireflection film of embodiment [3] mentioned above includes the substrate film, the hard coat layer covering the surface of the substrate film, the low-refractive-index layer covering the surface of the hard coat layer, and an antifouling layer covering a surface of the low-refractive-index layer. The low-refractive-index layer contains the cured product of the ionizing radiation curable composition including the (meth)acrylate compound including the reactive group, the hollow silica particles, the alumina particles surface-treated with the silane coupling agent including the reactive group capable of bonding to the (meth)acrylate compound. The antifouling layer contains the cured product of the ionizing radiation curable composition including the fluorine-containing (meth)acrylate, and the antireflection film has the water contact angle of 100° or larger on the surface thereof. Since the low-refractive-index layer is formed of the cured product of the composition containing not only the (meth)acrylate compound but also the alumina particles surface-treated with the silane coupling agent having the reactive group capable of bonding to the (meth)acrylate compound, and the surface of the low-refractive-index layer is covered with the antifouling layer formed of the cured product of the composition including the fluorine-containing (meth)acrylate, the antireflection film has excellent scratch resistance, as well as high antifouling properties and wear durability. Furthermore, since the antireflection film has the water contact angle of 100° or larger on the surface thereof, the antireflection film has high antifouling properties and solvent resistance sufficient to withstand the friction with a cloth or fingers wet with solvent such as alcohol.

In embodiment [4] mentioned above, the amount of the fluorine-containing (meth)acrylate contained in the antifouling layer is 90 mass% or larger of the total solid content of the antifouling layer, which improves effectively the antifouling properties of the antireflection film.

In embodiment [5] mentioned above, since the low-refractive-index layer does not include the fluorine-containing (meth)acrylate, the scratch resistance of the antireflection film is enhanced effectively.

### BRIEF DESCRIPTION OF DRAWINGS

Figure 1 is a cross-sectional view showing an antireflection film according to a first embodiment of the present invention.
Figure 2 is a cross-sectional view showing an antireflection film according to a second embodiment of the present invention.
Figure 3 is a cross-sectional view showing an antireflection film according to a third embodiment of the present invention.
Figure 4 is a cross-sectional view showing an antireflection film according to a fourth embodiment of the present invention.
Figure 5 is a cross-sectional view showing an antireflection film according to a fifth embodiment of the present invention.

### DESCRIPTION OF EMBODIMENTS

The present invention will be explained in detail below. Various physical properties in the present specification refer to values at room temperature and in an atmosphere unless otherwise specified. In addition, in the present specification, refractive indexes of a substance and a layer of a substance refer to refractive indexes measured at a wavelength of 589.3 nm unless otherwise specified.

### <Antireflection Film of First Embodiment>

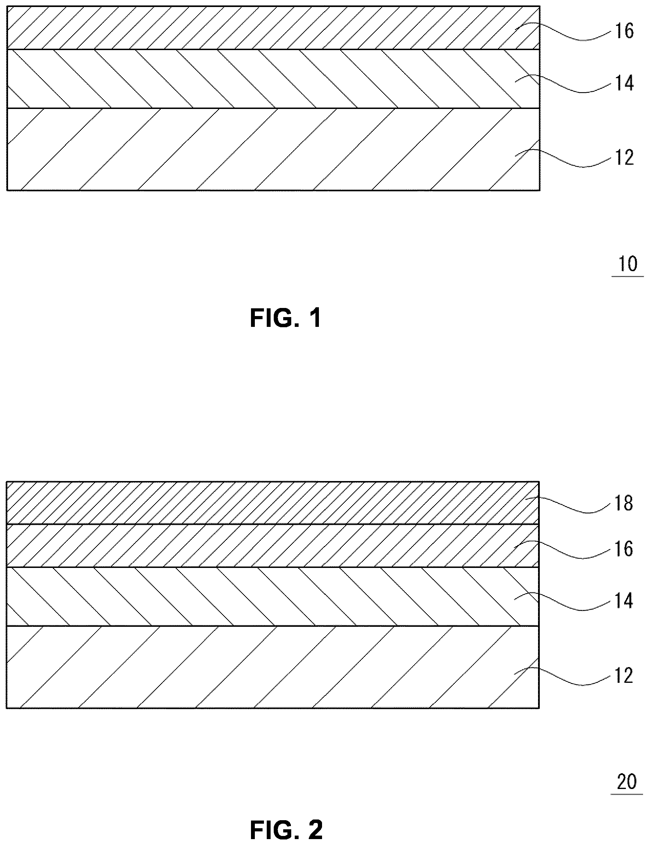

Figure 1 is a cross-sectional view of an antireflection film according to a first embodiment of the present invention. As shown in Figure 1, an antireflection film 10 according to the first embodiment of the present invention includes a substrate film 12, a hard coat layer 14 covering a surface of the substrate film 12, and a low-refractive-index layer 16 covering a surface of the hard coat layer 14. In the present embodiment, each of the layers mentioned above is layered in the order without any other layers being interposed therebetween. The low-refractive-index layer 16 is the layer exposed at the outermost surface of the antireflection film 10 as a whole.

### (Substrate Film)

There is no particular limitation to the substrate film 12 as long as the substrate film 12 is transparent. Examples of the substrate film 12 include a transparent polymer film and a glass film. The term "transparent" means that a total light transmittance in a visible light wavelength range is 50% or higher, and the total light transmittance is more preferably 85% or higher. The total light transmittance can be measured in accordance with JIS K 7361-1 (1997). The preferable thickness of the substrate film 12 is not particularly limited, but is within a range of 2 µm or larger to 500 µm or smaller from the viewpoint of ease of handling. The thickness is more preferably within a range of 2 µm or larger to 200 µm or smaller. The term "film" commonly refers to a structure having a thickness smaller than 0.25 mm, but here the term also encompasses a film having a thickness of 0.25 mm or larger as long as the film can be wound into a roll.

Examples of polymer materials of the substrate film 12 include polyester resins such as polyethylene terephthalate resin and polyethylene naphthalate resin, polycarbonate resin, poly(meth)acrylate resin, polystyrene resin, polyamide resin, polyimide resin, polyacrylonitrile resin, polyolefin resin such as polypropylene resin, polyethylene resin, polycycloolefin resin, and cycloolefin copolymer resin, cellulose-based resins such as triacetyl cellulose resin and diacetyl cellulose resin, polyphenylene sulfide resin, polyvinyl chloride resin, polyvinylidene chloride resin, and polyvinyl alcohol resin. The substrate film 12 may be formed of any one of these polymer materials or a combination of two or more of these polymer materials. Among these, polyethylene terephthalate resin, polyimide resin, polycarbonate resin, poly(meth)acrylate resin, polycycloolefin resin, cycloolefin copolymer resin, and triacetyl cellulose resin are more preferable from the viewpoint of optical properties and durability.

The substrate film 12 may be composed of a single layer that contains one or more of the polymer materials listed above, or two or more layers that include a layer containing one or more of the polymer materials listed above and a layer that contains one or more polymer materials different from those contained in the other layer.

### (Hard Coat Layer)

The hard coat layer 14 contributes to improvement of scratch resistance of the antireflection film 10. The hard coat layer 14 is formed of a cured product of an ionizing radiation curable composition containing a (meth)acrylate compound having a reactive group. The term "ionizing radiation" means electromagnetic waves or charged particle beams that have quantum energy sufficient to polymerize or crosslink molecules. Examples of the ionizing radiation include ultraviolet rays (i.e., UV), electromagnetic waves such as X-rays and y-rays, and charged particle beams such as electron beams (i.e., EB), α-rays, and ion beams. Among these, ultraviolet rays (i.e., UV) are particularly preferred from the viewpoint of productivity. Hereinafter, the ionizing radiation curable composition may be simply referred to as a curable composition. In the present specification, the term "(meth)acrylate" refers to "at least one of acrylate and methacrylate". The term "(meth)acryloyl" refers to "at least one of acryloyl and methacryloyl". The term "(meth)acryl" refers to "at least one of acryl and methacryl". The term "(meth)acrylate compound" refers to a compound including a (meth)acryloyl group such as a monomer, an oligomer, and a prepolymer. Hereinafter, the (meth)acrylate compound may be simply referred to as (meth)acrylate.

As the (meth)acrylate, either of a monofunctional (meth)acrylate and a multifunctional (meth)acrylate may be used. Furthermore, as the (meth)acrylate, a combination of a monofunctional (meth)acrylate and a multifunctional (meth)acrylate may be used. The curable composition more preferably contains the multifunctional (meth)acrylate as the (meth)acrylate from the viewpoint of improvement of curability.

Examples of the (meth)acrylate include urethane (meth)acrylate, silicone (meth)acrylate, alkyl (meth)acrylate, and aryl (meth)acrylate. Among these, the urethane (meth)acrylate, especially urethane (meth)acrylate oligomer is preferable. Specific examples of the urethane (meth)acrylate include those obtained such that a polyisocyanate compound, a hydroxyl group-containing (meth)acrylate compound, and a polyol compound, if necessary, are reacted with one another. Examples of the polyisocyanate compound include diisocyanate compounds such as hexamethylene diisocyanate, isophorone diisocyanate, tolylene diisocyanate, xylylene diisocyanate, and 4,4'-diphenylmethane diisocyanate, as well as nurate modified compounds, adduct modified compounds, and biuret modified compounds thereof. Examples of the hydroxyl group-containing (meth)acrylate compound include hydroxyethyl (meth)acrylate, hydroxypropyl (meth)acrylate, trimethylolpropane diacrylate, pentaerythritol tri(meth)acrylate, dipentaerythritol penta(meth)acrylate, and polyoxyalkylene modified products and polylactone modified products thereof. Examples of the polyol compound include ethylene glycol, propylene glycol, butanediol, hexanediol, polyoxyethylene glycol, polyoxypropylene glycol, glycerin, trimethylolpropane, pentaerythritol, biphenol, and bisphenol. If the curable composition for forming the hard coat layer 14 contains the urethane (meth)acrylate as an ultraviolet curable resin, the hard coat layer 14 has adequate flexibility. Therefore, the antireflection film 10 has high bending resistance and can be suitably used for flexible displays such as a foldable display and a rollable display that are repeatedly bent. Furthermore, cracking of the substrate film 12 is suppressed effectively even if the substrate film 12 is formed of polycycloolefin or a cycloolefin copolymer and is susceptible to cracking.

It is preferable that the (meth)acrylate contained in the curable composition further contains a pentaerythritol (meth)acrylate compound. Specific examples of the pentaerythritol (meth)acrylate compound include pentaerythritol tri(meth)acrylate, pentaerythritol tetra(meth)acrylate, dipentaerythritol penta(meth)acrylate, dipentaerythritol hexa(meth)acrylate, tripentaerythritol tetra(meth)acrylate, tripentaerythritol penta(meth)acrylate, tripentaerythritol hexa(meth)acrylate, tripentaerythritol hepta(meth)acrylate, and tripentaerythritol octa(meth)acrylate. In particular, it is preferable that the curable composition contains the pentaerythritol tri(meth)acrylate.

The curable composition for forming the hard coat layer 14 may contain a non-ultraviolet curable resin as necessary in addition to the ultraviolet curable resin. Furthermore, the curable composition for forming the hard coat layer 14 may contain a photopolymerization initiator. Furthermore, additives that can be generally added to the curable composition may be contained as necessary. Examples of such additives include a dispersant, a leveling agent, an antifoaming agent, a thixotropic agent, an antifouling agent, an antibacterial agent, a flame retardant, a slipping agent, an antistatic agent, inorganic particles, and resin particles. Furthermore, solvent may be contained as necessary.

Examples of the non-ultraviolet curable resin include thermoplastic resins and thermosetting resins. Examples of the thermoplastic resins include polyester resin, polyether resin, polyolefin resin, and polyamide resin. Examples of the thermosetting resins include unsaturated polyester resin, epoxy resin, alkyd resin, and phenolic resin.

Examples of the photopolymerization initiator include an alkylphenone-based photopolymerization initiator, an acylphosphine oxide-based photopolymerization initiator, and an oxime ester-based photopolymerization initiator. Examples of the alkylphenone-based photopolymerization initiator include 2,2'-dimethoxy-1,2-diphenylethane-1-one, 1-hydroxy-cyclohexyl-phenyl-ketone, 2-hydroxy-2-methyl-1-phenyl-propane-1-one, 1-[4-(2-hydroxyethoxy)-phenyl]-2-hydroxy-2-methyl-1-propane-1-one, 2-hydroxy-1-{4-[4-(2-hydroxy-2-methyl-propionyl)-benzyl]phenyl}-2-methyl-propane-1-one, 2-methyl-1-[4-(methylthio)phenyl]-2-morpholinopropane-1-one, 2-benzylmethyl-2-(dimethylamino)-1-(4-morpholinophenyl)-1-butanone, 2-(dimethylamino)-2-[(4-methylphenyl)methyl]-1-(4-morpholinophenyl)-1-butanone, 2-(4-methylbenzyl)-2-(dimethylamino)-1-(4-morpholinophenyl)-1-butanone, and N,N-dimethylaminoacetophenone. Examples of the acylphosphine oxide-based photopolymerization initiator include 2,4,6-trimethylbenzoyl diphenylphosphine oxide, bis(2,4,6-trimethylbenzoyl)-phenylphosphine oxide, and bis(2,6-dimethoxybenzoyl)-2,4,4-trimethyl-pentylphosphine oxide. Examples of the oxime ester-based photopolymerization initiator include 1,2-octanedion, 1-[4-(phenylthio)phenyl]-2-(O-benzoyloxime), and ethanone-1-[9-ethyl-6-(2-methylbenzoyl)-9H-carbazol-3-yl]-1-(O-acetyloxime). Any one of or a combination of two or more of these may be used as the photopolymerization initiator.

The amount of the photopolymerization initiator is preferably within a range of 0.1 mass% or larger to 10 mass% of a total solid content of the curable composition. The amount of the photopolymerization initiator is more preferably 1 mass% or larger and 5 mass% or smaller.

The inorganic particles and the resin particles may be added to the hard coat layer 14 to prevent blocking of the hard coat layer 14 or adjust the refractive index of the hard coat layer 14. By forming minute surface irregularities on the hard coat layer 14 with the inorganic particles and the resin particles to be added, blocking, which is a phenomenon in which a front surface and a rear surface adhere to each other, is suppressed effectively when a hard coat film that is composed of the substrate film 12 and the hard coat layer 14 is wound into a roll before the low-refractive-index layer 16 is formed.

Examples of the inorganic particles that can be used for adjustment of the refractive index of the hard coat layer 14 include metal oxide particles that are made of oxides of a metal such as titanium, zirconium, tin, zinc, silicon, niobium, aluminum, chromium, magnesium, germanium, gallium, antimony, and platinum. Particles of any one of or a combination of two or more of these metal oxides may be used as inorganic particles for optical adjustment. Among these, titanium oxide and zirconium oxide are particularly preferable from the viewpoint of achieving both the high refractive index and transparency. Examples of the resin particles include resin particles that are made of resins such as (meth)acrylic resin, styrene resin, styrene-(meth)acrylic resin, urethane resin, polyamide resin, silicone resin, epoxy resin, phenolic resin, polyethylene resin, and cellulose. Particles of any one of or a combination of two or more of these resins may be used as the resin particles.

The thickness of the hard coat layer 14 is not particularly limited, but is preferably 0.5 µm or larger from the viewpoint of making the hard coat layer 14 sufficiently hard. The thickness is more preferably 0.75 µm or larger. Furthermore, the thickness is preferably 20 µm or smaller from the viewpoint of suppressing curling of the hard coat layer 14 due to a difference in thermal contraction between the hard coat layer 14 and the substrate film 12. The thickness is more preferably 10 µm or smaller. The thickness of the hard coat layer 14 refers to the thickness of a relatively smooth portion in a region of the hard coat layer where there are no irregularities in the thickness direction formed by the inorganic particles or resin particles.

The refractive index of the hard coat layer 14 is preferably within the range of 1.49 or higher and 1.56 or lower from the viewpoint of suppressing interference unevenness caused by the difference in refractive index between the substrate film 12 and the hard coat layer 14.

An arithmetic average roughness Ra of the surface of the hard coat layer 14 in which surface irregularities are formed is preferably within a range of 0.3 nm or higher to 20 nm or lower from the viewpoint of suppressing blocking, for example. The arithmetic average roughness Ra is more preferably within a range of 0.5 nm or higher to 10 nm or lower.

Examples of the solvent that can be used in the curable composition for forming the hard coat layer 14 include alcohol-based solvents such as ethanol, isopropyl alcohol (IPA), n-butyl alcohol (NBA), ethylene glycol monomethyl ether (EGM), ethylene glycol monoisopropyl ether (IPG), propylene glycol monomethyl ether (PGM), and diethylene glycol monobutyl ether, ketone-based solvents such as methyl ethyl ketone (MEK), methyl isobutyl ketone (MIBK), cyclohexanone, and acetone, aromatic solvents such as toluene and xylene, ester-based solvents such as ethyl acetate (EtAc), propyl acetate, isopropyl acetate, and butyl acetate (BuAc), and amide-based solvents such as N-methylpyrrolidone, acetamide, and dimethylformamide. Any one of or a combination of two or more of these may be used as the solvent.

The solid content concentration (i.e., concentration of ingredients other than the solvent) of the curable composition may be set as appropriate by taking ease of coating, and the film thickness into consideration. The solid content concentration can be set to 1 mass% or higher and 90 mass% or lower, 1.5 mass% or higher and 80 mass% or lower, or 2 mass% or higher and 70 mass% or lower.

### (Low-Refractive-Index Layer)

In the antireflection film 10 according to the present embodiment, a low-refractive-index layer 16 covers the surface of the hard coat layer 14 as an antireflection layer. The low-refractive-index layer 16 has a lower refractive index than the hard coat layer 14, and expresses antireflection effects due to a difference in refractive index with the hard coat layer 14.

The low-refractive-index layer 16 contains the cured product of the ionizing radiation curable composition containing the (meth)acrylate compound having the reactive group as a binder resin, the alumina particles surface-treated with a silane coupling agent having the reactive group capable of bonding to the (meth) acrylate compound, and the hollow silica particles. Although the ionizing radiation includes various electromagnetic waves and charged particle beams as explained above for the hard coat layer 14, the low-refractive-index layer 16 is preferably formed by a cured product of an ultraviolet (i.e., UV) curable composition. The reactive group contained in the (meth)acrylate compound and the silane coupling agent is preferably ultraviolet reactive. Preferable ingredients of the compositions will be described below.

Examples of the (meth)acrylate compound containing the reactive group include urethane (meth)acrylate, silicone (meth)acrylate, alkyl (meth)acrylate, and aryl (meth)acrylate. The (meth)acrylate compound may contain only the (meth)acryloyl group as the reactive group or may contain other reactive groups in addition to the (meth)acryloyl group.

As the (meth)acrylate, either of a monofunctional (meth)acrylate and a multifunctional (meth)acrylate may be used. Furthermore, as the (meth)acrylate, a combination of a monofunctional (meth)acrylate and a multifunctional (meth)acrylate may be used. As the (meth) acrylate, the multifunctional (meth)acrylate is more preferably included.

Examples of the monofunctional (meth)acrylate include methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, isobornyl (meth)acrylate, 1-adamantyl (meth)acrylate, 2-methyl-2-adamantyl (meth)acrylate, 2-ethyl-2-adamantyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, benzyl (meth)acrylate, 1-naphthylmethyl (meth)acrylate, 2-naphthylmethyl (meth)acrylate, phenoxyethyl (meth)acrylate, phenoxy-2-methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2-hydroxypropyl (meth)acrylate, 2-hydroxyethyl (meth)acrylate, 2-hydroxypropyl (meth)acrylate, 2-hydroxybutyl (meth)acrylate, tetrahydrofurfuryl (meth)acrylate, butoxyethyl (meth)acrylate, ethoxydiethylene glycol (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, and methoxypolypropylene glycol (meth)acrylate.

Examples of the multifunctional (meth)acrylate include bifunctional (meth)acrylates, trifunctional (meth)acrylates, and tetrafunctional (meth)acrylates. More specific examples include 1,4-butanediol di(meth)acrylate, 1,6-hexanediol di(meth)acrylate, 1,9-nonanediol di(meth)acrylate, ethylene glycol di(meth)acrylate, diethylene glycol di(meth)acrylate, neopentyl glycol di(meth)acrylate, triethylene glycol di(meth)acrylate, tetraethylene glycol di(meth)acrylate, polyethylene glycol di(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tripentaerythritol tetra(meth)acrylate, tripentaerythritol penta(meth)acrylate, tripentaerythritol hexa(meth)acrylate, tripentaerythritol hepta(meth)acrylate, and tripentaerythritol octa(meth)acrylate.

Any one of or a combination of two or more of the (meth)acrylates listed above may be used as the (meth)acrylate compound contained in the curable composition. It is preferable that pentafunctional or higher (meth)acrylate is contained in the (meth)acrylate compound forming the cured composition from the viewpoint of improving the scratch resistance, and it is preferable that the ratio of the multifunctional (meth)acrylate having five or more functional groups is higher.

Furthermore, it is preferable that the multifunctional (meth)acrylate includes a dimer. A dimer of the multifunctional (meth)acrylate has an excellent curing rate and can increase easily the curing ratio of the curable composition, and accordingly, can further improve the scratch resistance. In particular, it is preferable that the multifunctional (meth)acrylate contains at least one selected from the group consisting of dimers of pentaerythritol tri(meth)acrylate, dipentaerythritol penta(meth)acrylate, and dipentaerythritol hexa(meth)acrylate, and it is more preferable that the multifunctional (meth)acrylate contains at least one selected from the group consisting of dimers of pentaerythritol triacrylate, dipentaerythritol pentaacrylate, and dipentaerythritol hexaacrylate.

The amount of the dimer is preferably within a range of 25 mass% or larger to 50 mass% or smaller of a total solid content of the multifunctional (meth)acrylate from the viewpoint of the scratch resistance, transparency, and solubility in a solvent. The amount of the dimer is more preferably 30 mass% or larger and 40 mass% or smaller.

Furthermore, the curable composition for forming the low-refractive-index layer 16 may contain a fluorine-containing (meth)acrylate as a part of the (meth)acrylate compound containing the reactive group. The compound can impart high antifouling properties to the antireflection film 10. Specific examples of the fluorine-containing (meth)acrylate include a (meth)acrylates containing a perfluoropolyether group. The perfluoropolyether group correspond to a compound in which all hydrogen atoms of a polyester such as polyethylene glycol or polypropylene glycol are replaced with fluorine atoms, and examples of such a group include a group having a repeated structure of any one of perfluoromethylene oxide, (-CF₂O-), perfluoroethylene oxide (-CF₂CF₂O-), perfluoropropylene oxide (-CF₂CF₂CF₂O-), or perfluoroisopropylene oxide (-CF(CF₃)CF₂O-), or a fluoropolyether group having a repeated structure of a combination of a plurality of these. The number of repeating units included in the repeating structure is preferably 1 to 100. Examples of such compounds include "KY-1203", "KY-1207", "KY-1211", "KY-1216", and "KY-1240", manufactured by Shin-Etsu Chemical Co., Ltd., "MEGAFACE RS-75", manufactured by DIC Corporation, "OPTOOL DAC-HP", and "OPTOOL DAC-100", manufactured by Daikin Industries, Ltd., and "FTERGENT 601AD", and " FTERGENT 601ADH2", manufactured by NEOS COMPANY LIMITED. The fluorine-containing (meth)acrylates described above can suppress adhesion of dirt and fingerprints and facilitate removal of the dirt and fingerprints.

It is preferable that the fluorine-containing (meth)acrylate does not have a urethane bond in its structure. The absence of the urethane bond in the structure of the fluorine-containing (meth)acrylate increases hardness of the low-refractive-index layer 16, which provides the low-refractive-index layer 16 particularly high wear durability.

The amount of the fluorine-containing (meth)acrylate contained in the low-refractive-index layer 16 is preferably 1.0 mass% or larger and 15.0 mass% or smaller relative to 100 mass% of the solid content of the low-refractive-index layer 16. If the amount of the fluorine-containing compound contained in the low-refractive-index layer 16 is 1.0 mass% or larger relative to 100 mass% of the solid content of the low-refractive-index layer 16, slipperiness of a surface of the low-refractive-index layer 16 is improved and the scratch resistance is improved. Furthermore, the antifouling properties are improved. From the viewpoint of improvement of the antifouling properties, the amount of the fluorine-containing (meth)acrylate contained in the low-refractive-index layer 16 is more preferably 3.0 mass% or larger, and further preferably 5.0 mass% or larger relative to 100 mass% of the solid content of the low-refractive-index layer 16. When the amount of the fluorine-containing (meth)acrylate contained in the low-refractive-index layer 16 is 15.0 mass% or smaller relative to 100 mass% of the solid content of the low-refractive-index layer 16, a reduction in the scratch resistance can be suppressed. From the viewpoint of suppressing the reduction in the scratch resistance, the amount of the fluorine-containing (meth)acrylate contained in the low-refractive-index layer 16 is more preferably 13.0 mass% or smaller, and further preferably 10.0 mass% or smaller relative to 100 mass% of the solid content of the low-refractive-index layer 16. The term "solid content of the low-refractive-index layer 16" used herein refers to ingredients other than ingredients that are liquid at normal temperature and are not fixed in the binder resin in the low-refractive-index layer 16. The solid content of the low-refractive-index layer 16 includes the alumina particles, the hollow silica particles, and the binder resin. The solid content does not include an oil ingredient that is used as an additive, nor a surfactant that is not fixed to the binder resin.

The alumina particles contained in the low-refractive-index layer 16 form convex portions on the surface of the low-refractive-index layer 16. The low-refractive-index layer 16 can have favorable scratch resistance due to the convex portions formed on the surface of the low-refractive-index layer 16 by the alumina particles.

The alumina particles may be filled particles or hollow particles, but are preferably the filled particles. The filled particles are particles that do not substantially include cavities therein, and a ratio of the cavities in the filled particles is lower than 5% of the volume of the filled particles. The hollow particles are particles that include cavities therein, and a ratio of the cavities in the hollow particles is higher than 5%. If the alumina particles are filled particles, the scratch resistance of the low-refractive-index layer 16 is more improved, and the scratch resistance of the antireflection film 10 is more improved. On the other hand, if the alumina particles are hollow particles, it is possible to reduce the refractive index of the low-refractive-index layer 16 and to suppress reflection of light. The ratio of the cavities in the hollow particles is preferably 10% or higher and 80% or lower of the volume of the hollow particles. If the ratio of the cavities is 10% or higher, it is possible to reduce the refractive index and to suppress reflection of light effectively. The ratio is more preferably 20% or higher, and further preferably 30% or higher. On the other hand, if the ratio of the cavities is 80% or lower, it is possible to suppress reduction in dispersibility of the alumina particles. The ratio is more preferably 60% or lower.

The shape of each alumina particle is not particularly limited, and may be a spherical shape, a needle-like shape, a scale-like shape, a rod-like shape, a fibrous shape, an amorphous shape. Among these, a spherical shape is preferable.

The alumina particles are surface-treated with a silane coupling agent having a reactive group capable of bonding to the (meth)acrylate compound. Since the silane coupling agent has the reactive group capable of bonding to the (meth)acrylate compound, the alumina particles surface-treated with the silane coupling agent can bond firmly to the (meth)acrylate contained in the low-refractive-index layer 16, and further bond to the reactive groups contained in the adjacent resin layer such as the hard coat layer 14. When these bonds are formed, the wear durability and the solvent resistance of the antireflection film 10 are improved.

Generally, the silane coupling agent has a hydrolyzable group and other functional group bonded to a silicon atom in a molecule. Here, the hydrolyzable group refers to a substituent that are directly bonded to the silicon atom and capable of generating a siloxane bond through hydrolysis and/or condensation reactions. Examples of the hydrolyzable group include a halogen atom, an alkoxy group, an acyloxy group, and an alkenyloxy group. When the hydrolyzable group has a carbon atom, the number of the carbon atom is preferably six or less, and more preferably four or less. In particular, the hydrolyzable group is preferably the alkoxy group having four or less carbon atoms, or the alkenyloxy group having four or less carbon atoms. The hydrolyzable group undergoes hydrolysis and forms a bond with an oxygen atom on the surface of each alumina particle, whereby the alumina particles are surface-treated.

The silane coupling agent used here has the reactive group capable of bonding to the (meth)acrylate, in addition to the hydrolyzable group described above. Examples of the reactive group include groups having carbon-carbon unsaturated double bonds such as the (meth) acryloyl group, a vinyl group, a styryl group, and an allyl group, and groups having ring-opening polymerizable groups such as an epoxy group, and an oxetanyl group. These reactive groups are ultraviolet reactive. In the low-refractive-index layer 16 containing the (meth)acrylate compound having the reactive group and the alumina particles surface-treated with the silane coupling agent having the reactive group, the reactive group of the (meth)acrylate compound and the reactive group of the silane coupling agent react with each other and form bonds in between.

Examples of the silane coupling agent having the carbon-carbon unsaturated double bond group as the reactive group include p-styryltrimethoxysilane, 2-(allyloxymethyl)acrylate (trimethoxysilyl)propyl, 3-acryloxypropyltrimethoxysilane, 3-methacryloxypropylmethyldiethoxysilane, 3-methacryloxypropyltriethoxysilane, 3-methacryloxypropylmethyldimethoxysilane, 3-methacryloxypropyltrimethoxysilane, 8-methacryloxyoctyltrimethoxysilane, p-styryltrimethoxysilane, vinyltriethoxysilane, vinyltrimethoxysilane, and 7-octenyltrimethoxysilane.

Examples of the silane coupling agent having the ring-opening polymerizable group as the reactive group include 3-glycidoxypropylmethyldiethoxysilane, 3-glycidoxypropyltriethoxysilane, 2-(3,4-epoxycyclohexyl)ethyltrimethoxysilane, 3-glycidoxypropylmethyldimethoxysilane, 3-glycidoxypropyltrimethoxysilane, and 8-glycidoxyoctyltrimethoxysilane.

Among these, the silane coupling agent having the carbon-carbon unsaturated double bond group is preferably used from the viewpoint of reactivity with the (meth)acrylate compound, and among the carbon-carbon unsaturated double bond group, the silane coupling agent having an ethylenic carbon-carbon double bond group such as the (meth)acryloyl group, the vinyl group, the styryl group, or the allyl group is particularly preferably used.

The amount of the silane coupling agent is preferably within a range of 1 part by mass or larger to 50 parts by mass or smaller relative to 100 parts by mass of the alumina particles. If the amount of the silane coupling agent is within the range, enhanced effects of surface treatment with the silane coupling agent is achieved. Furthermore, the low-refractive-index layer 16 can achieve improved wear durability and solvent resistance, in addition to high scratch resistance being maintained. The amount of the silane coupling agent is more preferably 10 parts by mass or larger and 40 parts by mass or smaller. A part of the silane coupling agent may remain in the low-refractive-index layer 16 without being bonded with the alumina particles, and the range of the preferable amount of the silane coupling agent described here refers to the amount of the silane coupling agent as a whole including the amount of the silane coupling agent without being bonded with the alumina particles.

To form convex portions on the surface of the low-refractive-index layer 16 and to achieve favorable scratch resistance, the alumina particles surface-treated with the silane coupling agent (hereinafter, the surface-treated alumina particles may be simply referred to as "alumina particles") are preferable to have an average particle size r that can form a relationship (r-d) of 10 nm or larger with the thickness d of the low-refractive-index layer 16. The difference (r-d) is more preferably 15 nm or larger and more preferably 18 nm or larger. On the other hand, the difference (r-d) is preferably 300 nm or smaller from the viewpoint of maintaining transparency by suppressing the height of convex portions to be formed. The difference is more preferably 200 nm or smaller and further preferably 100 nm or smaller.

The preferable average particle size r of the alumina particles depends on the thickness d of the low-refractive-index layer 16, but is within a range of 60 nm to 400 nm. The average particle size is more preferably 70 nm or larger, and more preferably 90 nm or larger. On the other hand, the average particle size is further preferably 300 nm or smaller and further preferably 200 nm or smaller. The average particle size r of the alumina particles is an arithmetic average value that is calculated on the volume basis using a laser diffraction scattering method in accordance with JIS Z 8825 and is an average particle size of particles including not only primary particles but also secondary particles consisting of aggregates of the particles.

The amount of the alumina particles contained in the low-refractive-index layer 16 is 0.1 mass% or larger and 6.0 mass% or smaller relative to 100 mass% of the solid content of the low-refractive layer 16. If the amount of the alumina particles contained in the low-refractive-index layer 16 is 0.1 mass% or larger relative to 100 mass% of the solid content of the low-refractive-index layer 16, excellent scratch resistance can be achieved. From the viewpoint of achieving excellent scratch resistance, the amount of the alumina particles contained in the low-refractive-index layer 16 is more preferably 1.0 mass% or larger, and further preferably 2.0 mass% or larger relative to 100 mass% of the solid content of the low-refractive-index layer 16. If the amount of the alumina particles contained in the low-refractive-index layer 16 is 6.0 mass% or smaller relative to 100 mass% of the solid content of the low-refractive-index layer 16, high transparency can be achieved. From the viewpoint of achieving high transparency, the amount of the alumina particles contained in the low-refractive-index layer 16 is more preferably 5.5 mass% or smaller, and further preferably 5.0 mass% or smaller relative to 100 mass% of the solid content of the low-refractive-index layer 16.

The hollow silica particles are particles that have an average particle size smaller than the average thickness d of the low-refractive-index layer 16. The hollow silica particles preferably have a smaller average particle size than the alumina particles that form convex portions on the surface of the low-refractive-index layer 16. The hollow silica particles substantially do not contribute to the formation of surface irregularities of the low-refractive-index layer 16. The hollow silica particles include cavities therein, and the ratio of the cavities in the hollow silica particles is 5% or higher of the volume of the hollow silica particles. The term "hollow" means a shell structure that is composed of an outer shell and a cavity inside the shell, or a porous structure that includes many cavities. Due to the hollow silica particles having the hollow structure, the refractive index of the low-refractive-index layer 16 can be reduced to suppress reflection of light. The shape of each hollow silica particle is not particularly limited, but is preferably a spherical shape, a spindle-like shape, an egg-like shape, a flat plate shape, a cube shape, an amorphous shape, or the like. Among these, a spherical shape, a flat plate shape, and a cube shape are particularly preferable.

The ratio of the cavities in the hollow silica particles is preferably 10% or higher and 80% or lower of the volume of the hollow silica particles. If the ratio of the cavities is 10% or higher of the volume of the hollow silica particles, the refractive index of the low-refractive-index layer 16 can be reduced to suppress reflection of light. The ratio of the cavities is more preferably 20% or higher, and further preferably 30% or higher of the volume of the hollow silica particles. On the other hand, if the ratio of the cavities is 80% or lower of the volume of the hollow silica particles, it is possible to suppress reduction in dispersibility of the hollow silica particles. The ratio of the cavities is further preferably 60% or lower of the volume of the hollow silica particles.

The preferable average particle size of the hollow silica particles depends on the thickness d of the low-refractive-index layer 16, but is 5 nm or larger and 100 nm or smaller. The average particle size of the hollow silica particles is more preferably 20 nm or larger and further preferably 40 nm or larger. On the other hand, the average particle size of the hollow silica particles are further preferably 80 nm or smaller and more preferably 70 nm or smaller. If the average particle size of the hollow silica particles is within these preferable ranges, an excellent antireflection effects and transparency of the low-refractive-index layer 16 can be achieved. The average particle size is an arithmetic average value that is calculated on the volume basis using the laser diffraction scattering method in accordance with JIS Z 8825. The average particle size is an average size of particles including not only primary particles but also secondary particles consisting of aggregates of the articles.

The refractive index of the hollow silica particles is preferably within a range of 1.01 or higher to 1.45 or lower. The refractive index of the hollow silica particles is more preferably within a range of 1.15 or higher to 1.38 or lower, and further preferably within a range of 1.15 or higher to 1.35 or lower. If the refractive index of the hollow silica particles is within these ranges, excellent antireflection effects can be achieved.

The amount of the hollow silica particles contained in the low-refractive-index layer 16 is preferably 6.0 mass% or larger and 49.9 mass% or smaller relative to 100 mass% of the solid content of the low-refractive-index layer 16. If the amount of the hollow silica particles contained in the low-refractive-index layer 16 is 6.0 mass% or larger relative to 100 mass% of the solid content of the low-refractive-index layer 16, excellent antireflection properties can be achieved. From the viewpoint of achieving excellent antireflection properties, the amount of the hollow silica particles contained in the low-refractive-index layer 16 is more preferably 10 mass% or larger, further preferably 20 mass% or larger, and particularly preferably 30 mass% or larger relative to 100 mass% of the solid content of the low-refractive-index layer 16. If the amount of the hollow silica particles contained in the low-refractive-index layer 16 is 49.9 mass% or smaller relative to 100 mass% of the solid content of the low-refractive-index layer 16, reduction in scratch resistance can be suppressed. From the viewpoint of suppressing reduction in scratch resistance, the amount of the hollow silica particles contained in the low-refractive-index layer 16 is more preferably 45 mass% or smaller, and further preferably 40 mass% or smaller relative to 100 mass% of the solid content of the low-refractive-index layer 16.

The total amount of the alumina particles and the hollow silica particles contained in the low-refractive-index layer 16 is preferably 10 mass% or larger and 50 mass% or smaller relative to 100 mass% of the solid content of the low-refractive-index layer 16. If the total amount of the alumina particles and the hollow silica particles contained in the low-refractive-index layer 16 is 10 mass% or larger relative to 100 mass% of the solid content of the low-refractive-index layer 16, excellent scratch resistance can be achieved. From the viewpoint of achieving excellent scratch resistance, the total amount of the alumina particles and the hollow silica particles contained in the low-refractive-index layer 16 is more preferably 20 mass% or larger, and further preferably 30 mass% or larger relative to 100 mass% of the solid content of the low-refractive-index layer 16. On the other hand, if the total amount of the alumina particles and the hollow silica particles contained in the low-refractive-index layer 16 is 50 mass% or smaller relative to 100 mass% of the solid content of the low-refractive-index layer 16, the alumina particles and the hollow silica particles can be sufficiently retained in the low-refractive-index layer 16, and accordingly, excellent scratch resistance can be achieved. From the viewpoint of achieving excellent scratch resistance, the total amount of the alumina particles and the hollow silica particles contained in the low-refractive-index layer 16 is more preferably 45 mass% or smaller, and further preferably 40 mass% or smaller relative to 100 mass% of the solid content of the low-refractive-index layer 16.

The low-refractive-index layer 16 is formed from an ionizing radiation curable composition including the (meth)acrylate compound having the reactive group, the alumina particles surface-treated with the silane coupling agent having the reactive group capable of bonding to the (meth)acrylate compound, and the hollow silica particles. The low-refractive-index layer 16 has bonds formed via the reactive groups by ionizing radiation irradiation between molecules of the (meth)acrylate compounds, between the surface-treated alumina particles, between the molecules of the (meth)acrylate compound and the surface-treated alumina particle, and between ingredients having the reactive group contained in the adjacent layer and the (meth)acrylate compound and the surface-treated alumina particles. As a result, the low-refractive-index layer 16 has high scratch resistance, wear durability, and solvent resistance. As described above, the reactive groups contained in the (meth)acrylate compound and the silane coupling agent are preferably ultraviolet reactive. When the (meth)acrylate compound and the alumina particles have the reactive groups that are ultraviolet reactive, the low-refractive-index layer 16, which is formed by ultraviolet irradiation of the composition containing the (meth)acrylate compound and the surface-treated alumina particles, achieves improved scratch resistance, wear resistance, solvent resistance. As a result, the antireflection film 10 achieves improved scratch resistance, wear durability, and solvent resistance.

When the (meth)acrylate compound contains a resin having the reactive group that is ultraviolet reactive (i.e., an ultraviolet curable resin), it is preferable that the composition for forming the low-refractive-index layer 16 contains a photopolymerization initiator. Furthermore, the composition for forming the low-refractive-index layer 16 may also contain a solvent (i.e., a solvent used as a dispersant in particle dispersion liquid containing the alumina particles, and/or a solvent added separately from it) as necessary. The binder resin in the low-refractive-index layer 16 may contain only the ultraviolet curable resin such as the (meth) acrylic resin, or a combination of the ultraviolet curable resin and a non-ultraviolet curable resin. The specific examples of the chemical species for the non-ultraviolet curable resin, photopolymerization initiator, and solvent that can be contained in the composition for forming the hard coat layer 14 as described above can also be suitably applied to the composition for forming the low-refractive-index layer 16.

The amount of the photopolymerization initiator is preferably within a range of 0.1 mass% or larger to 10 mass% or smaller of the total solid content of the composition for forming the low-refractive-index layer 16. The amount of the photopolymerization initiator is more preferably 1 mass% or larger and 5 mass% or smaller.

The low-refractive-index layer 16 may contain additives as necessary. Examples of such additives include a dispersant, a leveling agent, an antifoaming agent, a thixotropic agent, an antifouling agent, an antibacterial agent, a flame retardant, a slipping agent, a refractive index adjuster, inorganic particles other than the alumina particles, and resin particles. When inorganic particles other than the alumina particles are contained in the low-refractive-index layer 16, the inorganic particles may be surface-treated with a silane coupling agent having a reactive group capable of bonding to the (meth)acrylate compound, similar to the alumina particles.

In the present embodiment, the antireflection film 10 has a water contact angle of 100° or larger on the surface of the antireflection film 10, namely on the surface of the low-refractive-index layer 16. This feature provides the antireflection film 10 with high antifouling properties. Furthermore, this feature improves the slipperiness of the surface of the low-refractive-index layer 16, and accordingly, contributes to improvement of the scratch resistance. The water contact angle on the surface of the low-refractive-index layer 16 is preferably 105° or larger, or more preferably 110° or larger from the viewpoint of achieving high antifouling properties. The water contact angle of the low-refractive-index layer 16 depends on the composition of the constituent materials of the low-refractive-index layer 16. For example, if the fluorine-containing (meth)acrylate or a silicone-containing (meth)acrylate is contained in the low-refractive-index layer 16, the water contact angle becomes larger. Furthermore, if the minute surface irregularities are formed on the surface of the low-refractive-index layer 16, the water contact angle of the low-refractive-index layer 16 can also be larger. In the present embodiment, the alumina particles contained in the low-refractive-index layer 16 can play the role of forming the surface irregularities. However, the formation of the irregularities on the surface of the low-refractive-index layer 16 can reduce ease of wiping-off of the surface. From the viewpoint of lowering the possibility of the reduction of ease of wiping-off of the surface, it is preferable to increase the water contact angle by adding the fluorine-containing (meth)acrylate or silicone-containing (meth)acrylate instead of or in addition to formation of the irregularities. The upper limit of the water contact angle on the surface of the low-refractive-index layer 16, although not particularly limited, is 130° or smaller in general.

The refractive index of the low-refractive-index layer 16 is not particularly limited as long as it is lower than that of the hard coat layer 14, but is preferably 1.35 or higher and 1.52 or lower. If the refractive index is higher than 1.35, the low-refractive-index layer 16 can have sufficient strength and achieve favorable scratch resistance. On the other hand, if the refractive index is 1.52 or lower, the antireflection film 10 can be made to have a lower reflectance. From those viewpoints, the refractive index of the low-refractive-index layer 16 is preferably 1.38 or higher and 1.50 or lower, and more preferably 1.40 or higher and 1.49 or lower.

The average thickness d of the low-refractive-index layer 16 is preferably within a range of 80 nm or larger to 110 nm or smaller, further preferably 85 nm or larger, and yet further preferably 90 nm or larger. On the other hand, the average thickness d is more preferably 105 nm or lower, and further preferably 100 nm or lower. If the average thickness d is within the ranges mentioned above, it is possible to achieve favorable low luminous reflectance and suppress reflection of light. The thickness of the low-refractive-index layer 16 is the thickness of a relatively smooth portion in a region of the low-refractive-index layer 16 where the irregularities due to the alumina particles are absent in the thickness direction.

### (Production Method of Antireflection Film)

The antireflection film 10 can be manufactured by forming the hard coat layer 14 and the low-refractive-index layer 16 over the substrate film 12 in this order. Each layer can be formed by applying a composition for forming the layer, drying the composition as necessary, and then curing the composition in a manner appropriate to a curing property of the composition such as irradiation with ionizing radiation such as ultraviolet rays. After formation of a layer, the next layer can be formed by applying a composition for forming the next layer, and drying the composition as necessary and then curing the composition. By repeating these processes, a layered structure of the hard coat layer 14 and the low-refractive-index layer 16 is formed, and the antireflection film 10 can be manufactured.

The composition for forming each layer can be applied using a wet method. More specifically, the composition can be applied by using various coating methods such as reverse gravure coating, direct gravure coating, die coating, bar coating, wire bar coating, roll coating, spin coating, dip coating, spray coating, knife coating, and kiss coating, and various printing methods such as inkjet method, offset printing, screen printing, and flexo printing.

There is no particular limitation to the drying process for each layer as long as the solvent contained in the applied solution can be removed, but it is preferable to perform the drying process at a temperature of 50°C to 150°C for about 10 to 180 seconds.

Ultraviolet irradiation for each layer can be performed using a high pressure mercury lamp, an electrodeless (i.e., microwave type) lamp, a xenon lamp, a metal halide lamp, or any other suitable ultraviolet irradiation device. Ultraviolet irradiation may be performed in an atmosphere of an inert gas such as nitrogen, as necessary. The ultraviolet irradiation amount is not particularly limited, but is preferably 50 to 800 mJ/cm², and more preferably 100 to 300 mJ/cm².

When the hard coat layer 14 is formed over the surface of the substrate film 12, the surface treatment may be applied on the surface of the substrate film 12 before application of the composition for forming the hard coat layer 14, in order to improve adhesion between the substrate film 12 and the hard coat layer 14. Examples of the surface treatment include corona treatment, plasma treatment, hot air treatment, ozone treatment, and ultraviolet treatment.

### (Characteristics of Antireflection Film)

The antireflection film 10 formed as described above includes the substrate film 12, the hard coat layer 14 covering the surface of the substrate film 12, the low-refractive-index layer 16 covering the surface of the hard coat layer 14. The low-refractive-index layer 16 contains the cured product of the ionizing radiation curable composition containing the (meth)acrylate compound having the reactive group, the hollow silica particles, and the alumina particles surface-treated with the silane coupling agent having the reactive group capable of bonding to the (meth)acrylate compound. Furthermore, the antireflection film 10 has the water contact angle of 100° or larger on the surface thereof. Therefore, the antireflection film 10 has high antifouling properties, wear durability and solvent resistance, and excellent scratch resistance.

In the antireflection film 10 according to the present embodiment, the water contact angle on the surface thereof is 100° or larger, which allows the antireflection film 10 to have high antifouling properties. Since the antireflection film 10 has high antifouling properties, stains such as fingerprints are less likely to adhere to the surface of the antireflection film 10, and even if stains adhere to the surface of the antireflection film 10, they can be easily removed. Furthermore, in the antireflection film 10 according to the present embodiment, the alumina particles contained in the low-refractive-index layer 16 contribute to the scratch resistance of the antireflection film 10. Furthermore, the alumina particles are surface-treated as described above and formation of the bonds between the alumina particles and the (meth)acrylate compound contributes to improvement of the wear durability and solvent resistance. Thus, the antireflection film 10 according to the present embodiment has high scratch resistance, wear durability, and solvent resistance, in addition to high antireflection properties and antifouling properties. Accordingly, the antireflection film 10 is particularly suitable for applications in which the antireflection film is touched frequently by fingers, including an antireflection film placed on the surface of a touch panel. The antireflection film 10 has high solvent resistance, which allows the antireflection film 10 to maintain high scratch resistance and wear durability even when the antireflection film 10 is subjected to friction with a cloth or fingers wet with solvent such as alcohol for cleaning or sterilization.

The antireflection film 10 preferably has a haze of 2.0 or lower, more preferably 1.5 or lower, and further preferably 1.0 or lower from the viewpoint of good visibility. The antireflection film 10 preferably has a lower luminous reflectance. The luminous reflectance is more preferably 2.0% or lower, and further preferably 1.0% or lower. If the luminous reflectance is 2.0% or lower, the antireflection properties of the antireflection film 10 are regarded as high enough.

The arithmetic average roughness Ra of the surface of the low-refractive-index layer 16 is preferably within a range of 1.0 nm or larger to 20 nm or smaller from the viewpoint of both the scratch resistance and wear durability. The arithmetic average roughness Ra is more preferably 3.0 nm or larger and 15 nm or smaller, and more preferably 5.0 nm or larger and 10 nm or smaller.

### <Antireflection Film of Second Embodiment>

Figure 2 shows an antireflection film 20 according to the second embodiment. The antireflection film 20 includes the substrate film 12, the hard coat layer 14 covering the surface of the substrate film 12, the low-refractive-index layer 16 covering the surface of the hard coat layer 14, and an antifouling layer 18 covering the surface of the low-refractive-index layer 16.

The antireflection film 20 according to the second embodiment differs from the antireflection film 10 according to the first embodiment in that the antireflection film 20 includes an antifouling layer 18 covering the surface of the low-refractive-index layer 16, but is the same as the antireflection film 10 according to the first embodiment in the other aspects, and descriptions of the same structures are omitted.

### (Antifouling Layer)

In the antireflection film 20 according to the present embodiment, the antifouling layer 18 covers the surface of the low-refractive-index layer 16. The antifouling layer 18 enhances antifouling properties of the antireflection film 20.

The antifouling layer 18 is formed of a cured product of an ionizing radiation curable composition including a fluorine-containing (meth)acrylate. In particular, the antifouling layer 18 is preferably formed of a cured product of an ultraviolet curable composition.

Since the antifouling layer 18 is formed of the cured product of the ionizing radiation curable composition including the fluorine-containing (meth)acrylate, the antireflection film 20 having the antifouling layer 18 on the surface thereof has excellent antifouling properties and the solvent resistance as well as wear durability and scratch resistance. Specific examples of the fluorine-containing (meth)acrylate include a (meth)acrylate containing a perfluoropolyether group. The perfluorinated polyether group refers to that in which all of hydrogen atoms in polyethers such as polyethylene glycol and polypropylene glycol are replaced with fluorine, and the examples of the perfluorinated polyether group include perfluoromethylene oxide, (-CF₂O-), perfluoroethylene oxide (-CF₂CF₂O-), perfluoropropylene oxide (-CF₂CF₂CF₂O-), perfluoroisopropylene oxide (-CF(CF(CF₃)CF₂O-), and a fluoropolyether group having a repeated structure based on a combination of several of these. The number of repeating units included in the repeating structure mentioned above is preferably 1 to 100. Specific examples of the compound include "KY-1203", "KY-1207", "KY-1211", "KY-1216", and "KY-1240", manufactured by Shin-Etsu Chemical Co., Ltd., "Megafac RS-75", manufactured by DIC, "Optool DAC-HP" and "Optool DAC-100", manufactured by Daikin Industries, Ltd., and "Ftergent 601AD" and "Ftergent 601ADH2" manufactured by Neos.

It is preferable that the fluorine-containing (meth)acrylate does not have a urethane bond in its structure. The absence of the urethane bond in the structure of the fluorine-containing (meth)acrylate increases hardness of the antifouling layer 18, and provides the antifouling layer 18 particularly high wear durability.

In the antifouling layer 18, the amount of the fluorine-containing (meth)acrylate is preferably 90 mass% or larger of the total solid content of the antifouling layer 18. With the amount, it is possible to enhance the antifouling properties improved by the fluorine-containing (meth)acrylate. From the viewpoint of achieving higher antifouling properties, the amount of the fluorine-containing (meth)acrylate contained in the antifouling layer 18 is more preferably 92 mass% or larger of the total solid content of the antifouling layer 18. Furthermore, it is more preferable that the entire amount of the resin ingredients for forming the antifouling layer 18 is the fluorine-containing (meth)acrylate other than the ingredients inevitably contained in the antifouling layer 18. The term "solid content of the antifouling layer 18" used herein refers to ingredients other than ingredients that are liquid at room temperature and are not fixed in a curable ingredient in the antifouling layer 18. The solid content of the antifouling layer 18 includes the fluorine-containing (meth)acrylate.

The antifouling layer 18 can be formed using a composition that contains the fluorine-containing (meth)acrylate. The antifouling layer 18 may be formed by placing the composition for forming the antifouling layer 18 in layers on the surface of the low-refractive-index layer 16 and then curing the composition. If the antifouling layer 18 is formed as a cured product of the ultraviolet curable composition, it is preferable that the composition for forming the antifouling layer 18 contains further a photopolymerization initiator. Furthermore, the composition may contain a solvent as necessary.

The specific examples of the chemical species for the photopolymerization initiator and the solvent that can be contained in the composition for forming the hard coat layer 14 described above can also be suitably applied to the composition for forming the antifouling layer 18. The amount of the photopolymerization initiator is preferably within a range of 0.1 mass% or larger to 15 mass% or smaller of the total solid content of the composition for forming the antifouling layer 18. The amount of the photopolymerization initiator is more preferably 3 mass% or larger and 10 mass% or smaller.

The antifouling layer 16 may contain additives as necessary. Examples of such additives include a dispersant, a leveling agent, an antiforming agent, a thixotropic agent, an antifouling agent, a flame retardant, a slipping agent, and a refractive-index adjuster. However, it is preferable that the antifouling layer 18 does not contain filled particles including metal acid particles such as the alumina particles or the hollow silica particles. Even if the antifouling layer 18 contains filled particles, it is preferable that the particle size of the filled particles is kept to be 10 nm or smaller, and the amounts of the filled particles are kept to be 1 mass% or smaller relative to 100 mass% of the solid content of the antifouling layer 18.

In the present embodiment, the water contact angle on the surface of the antireflection film 20, namely the surface of the antifouling layer 18 is 100° or larger. This feature provides the antireflection film 20 with high antifouling properties. Furthermore, this feature improves the slipperiness of the surface of the antifouling layer 18, and accordingly, contributes to improvement of the scratch resistance. The water contact angle of the antifouling layer 18 is preferably 105° or larger, and more preferably 110° or larger from the viewpoint of achieving high antifouling properties. The water contact angle on the surface of the antifouling layer 18 becomes larger by increasing the amount of the fluorine-containing (meth)acrylate contained in the antifouling layer 18, for example. The upper limit of the water contact angle on the surface of the antifouling layer 18, although not particularly limited, is 130° or smaller in general.

The thickness of the antifouling layer 18 is preferably 1 nm or larger. If the antifouling layer 18 has the thickness of 1 nm or larger, it is possible to achieve improved effects of the antifouling properties by the antifouling layer 18. The thickness of the antifouling layer 18 is more preferably 3 nm or larger and further preferably 5 nm or larger. On the other hand, the thickness of the antifouling layer 18 is preferably 15 nm or smaller. If the thickness of the antifouling layer 18 is 15 nm or smaller, it is possible to maintain high antireflection properties of the antireflection film 20. The thickness of the antifouling layer 18 is more preferably 10 nm or smaller.

The refractive index of the antifouling layer 18 is preferably 1.6 or lower. If the refractive index is 1.6 or lower, it is possible to maintain high antireflection properties of the antireflection film 20. The refractive index of the antifouling layer 18 is more preferably 1.55 or lower and further preferably 1.50 or lower. On the other hand, the refractive index of the antifouling layer 18 is not particularly limited as long as the thickness of the antifouling layer 18 is within the ranges mentioned above, but is preferably 1.3 or higher, and more preferably 1.35 or higher.

The arithmetic average roughness Ra of the antifouling layer 18 is preferably within a range of 1.0 nm or larger to 20 nm or smaller from the viewpoint of both the scratch resistance and the wear durability. The arithmetic average roughness Ra is more preferably 3.0 nm or larger and 15 nm or smaller, and further preferably 5.0 nm or larger and 10 nm or smaller.

In the antireflection film 20 according to the present embodiment, the low-refractive-index layer 16 may have the same composition as that of the low-refractive-index layer in the antireflection film 10 according to the first embodiment. However, the antireflection film 20 according to the present embodiment differs from the antireflection film 10 according to the first embodiment in that the antifouling layer 18 is formed over the low-refractive-index layer 16 and the antifouling layer 18 exhibits high antifouling properties. Accordingly, the low-refractive-index layer 16 in the present embodiment is not required to contain a fluorine-containing compound for the purpose of improvement of the antifouling properties. If a large amount of the fluorine-containing compound is contained in the low-refractive-index layer 16, the low-refractive-index layer 16 decreases its wettability with the composition for forming the antifouling layer 18 and the antifouling layer 18 weakens its adhesion, leading to a decrease in the scratch resistance of the antireflection film 20. However, if the low-refractive-index layer 16 is kept without containing the fluorine-containing compound, the scratch resistance of the antireflection film 20 can be high. Even when the fluorine-containing compound is contained in the low-refractive-index layer 16, the amount thereof is preferably kept to 1 mass% or smaller relative to 100 mass% of the solid content of the low-refractive-index layer 16.

In the antireflection film 20 according to the present embodiment, the low-refractive-index layer 16 has the antifouling layer 18 formed in direct contact with the surface of the low-refractive-index layer 16. The antireflection film 20 does not have a primer layer having effects of improving adhesion, such as a layer formed of fluorine-free (meth)acrylate resin, on the surface of the low-refractive-index layer 16. The antireflection film 20 can be made to have a simple structure and achieve enhanced productivity as well as cost reduction effects by not having such a primer layer.

### <Antireflection Film of Other Embodiments>

The antireflection film according to the present invention has the hard coat layer 14 and the low-refractive-index layer 16 layered over the substrate film 12 in this order, and optionally has the antifouling layer 18 over them. The antireflection film is not limited to the structure of the antireflection film 10 according to the first embodiment and that of the antireflection film 20 according to the second embodiment, as long as the low-refractive-index layer 16 has the specified composition. The following are examples of other embodiments of the antireflection film according to the present invention.

### (Third Embodiment)

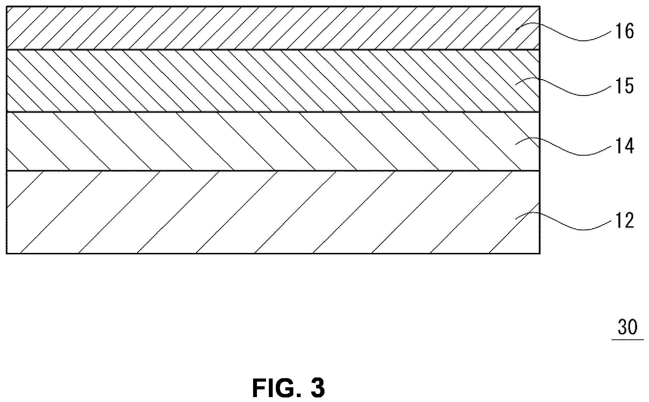

Figure 3 shows an antireflection film 30 according to the third embodiment of the present invention. The antireflection film 30 according to the third embodiment has the substrate film 12, the hard coat layer 14 covering the surface of the substrate film 12, a high-refractive-index layer 15 covering the surface of the hard coat layer 14, and the low-refractive-index layer 16 covering a surface of the high-refractive-index layer 15.

The antireflection film 30 according to the third embodiment differs from the antireflection film 10 according to the first embodiment in that the high-refractive-index layer 15 is formed between the hard coat layer 14 and the low-refractive-index layer 16, but is the same as the antireflection film 10 according to the first embodiment in the other aspects, and descriptions of the same structures are omitted.

The high-refractive-index layer 15 is a layer having a higher refractive index than the hard coat layer 14 and the low-refractive-index layer 16. The antireflection film 30 can exhibit high antireflection effects since the high-refractive-index layer 15 is formed between the hard coat layer 14 and the low-refractive-index layer 16. The refractive index of the high-refractive-index layer 15 is preferably within a range of 1.55 or higher to 1.80 or lower. The refractive index is more preferably 1.60 or higher and 1.70 or lower.

Constituent materials of the high-refractive-index layer 15 are not specifically limited, and conventionally known materials that have been used for forming antireflection films may be used to obtain a desired refractive index. For example, it is possible to select the materials appropriately from those described above as materials that can be used in the hard coat layer 14 and the low-refractive-index layer 16. The refractive index of the high-refractive-index layer 15 can be adjusted by selecting types and amounts of the binder resin, the inorganic oxide particles, and the resin particles. For example, the high-refractive-index-layer 15 can have a higher refractive index than the low-refractive-index layer 16 by containing a sufficient amount of the inorganic oxide particles.

An average thickness of the high-refractive-index layer 15 varies depending on setting of the refractive index. However, the antireflection function can be further improved by setting the average thickness to 50 nm or larger and 200 nm or smaller, for example. The high-refractive-index layer 15 may include by two or more layers having different refractive indexes.

### (Fourth Embodiment)

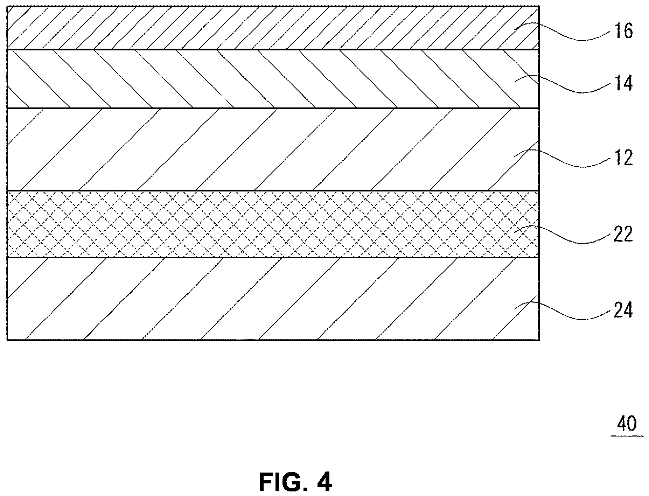

Figure 4 shows an antireflection film 40 according to the fourth embodiment. The antireflection film 40 according to the fourth embodiment has the substrate film 12, the hard coat layer 14 covering one of the surfaces of the substrate film 12, and the low-refractive-index layer 16 covering one of the surfaces of the hard coat layer 14. The antireflection film 40 also has a transparent adhesive layer 22 covering the other surface of the substrate film 12. The transparent adhesive layer 22 may be provided with a release film 24 over the surface of the transparent adhesive layer 22, as necessary. The release film 24 serves as a protective layer for the transparent adhesive layer 22 before use of the antireflection film 40, and is separated off from the transparent adhesive layer 22 when the antireflection film 40 is used.

The antireflection film 40 according to the fourth embodiment differs from the antireflection film 10 according to the first embodiment in that the antireflection film 40 has the transparent adhesive layer 22 on the other surface of the substrate film 12, but is the same as the antireflection film 10 according to the first embodiment in the other aspects, and descriptions of the same structures are omitted.

The transparent adhesive layer 22 functions to attach and adhere the antireflection film 40 to a surface of a display closely. Furthermore, due to having the transparent adhesive layer 22, the antireflection film 40 has effects of preventing shattering of glass that constitutes the display. That is, the antireflection film 40 also functions as an anti-shattering film.

An adhesive composition that forms the transparent adhesive layer 22 may contain a known adhesive resin such as acrylic-based adhesive, a silicone-based adhesive, and a urethane-based adhesive. Among these, an acrylic-based adhesive is preferable from the viewpoint of optical transparency and heat resistance. The adhesive composition preferably contains a crosslinking agent to increase a cohesive force of the transparent adhesive layer 22. Examples of the crosslinking agents include an isocyanate-based crosslinking agent, an epoxy-based crosslinking agent, an aziridine-based crosslinking agent, and a chelate-based crosslinking agent.

The adhesive composition may also contain additives as necessary. Examples of additives include known additives such as a plasticizer, a silane coupling agent, a surfactant, an antioxidant, a filler, a curing accelerator, and a curing retarder. Furthermore, the adhesive composition may be diluted with an organic solvent from the viewpoint of productivity.

The thickness of the transparent adhesive layer 22 is not particularly limited, but is preferably within a range of 5 µm or larger to 100 µm or smaller. The thickness is more preferably within a range of 10 µm or larger to 50 µm or smaller.

The transparent adhesive layer 22 can be formed by a method of applying directly the adhesive composition to the other surface of the substrate film 12, a method of applying the adhesive composition to the surface of the release film 24 to form the adhesive layer 22 and thereafter transferring the adhesive layer 22 to the other surface of the substrate film 12, or a method of applying the adhesive composition to a surface of a first release film to form the adhesive layer 22, attaching a second release film, and transferring the adhesive layer 22 to the other surface of the substrate film 12 after separating either one of the release films, for example.

An adhesive force of the transparent adhesive layer 22 with respect to a glass is preferably 4 N/25 mm or higher from the viewpoint of effects of preventing shattering of glass. The adhesive force of the transparent layer 22 is more preferably 6 N/25 mm or higher and further preferably 10 N/25mm or higher.

### (Fifth Embodiment)

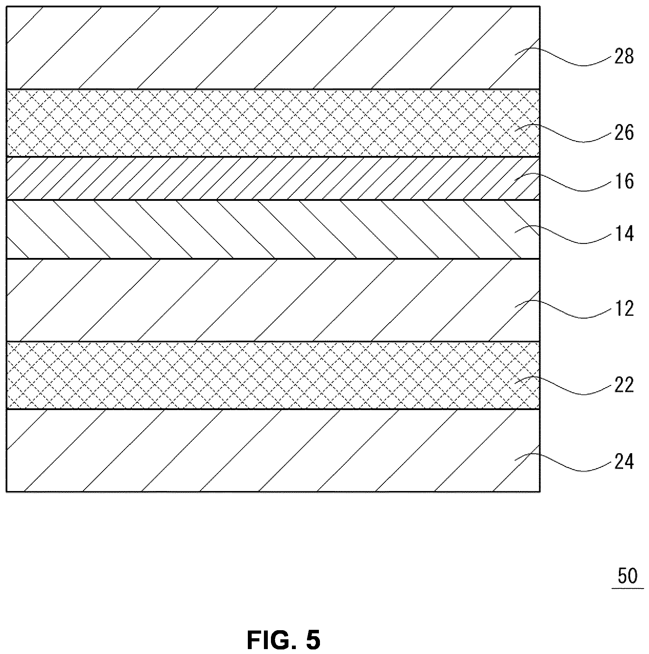

Figure 5 shows an antireflection film 50 according to the fifth embodiment. The antireflection film according to the fifth embodiment has the substrate film 12, the hard coat layer 14 covering one of the surfaces of the substrate film 12, the low-refractive-index layer 16 covering the surface of the hard coat layer 14, and a protective film 28 covering the surface of the low-refractive-index layer 16 with an adhesive layer 26 arranged therebetween. Furthermore, the antireflection film 50 also has the transparent adhesive layer 22 covering the other surface of the substrate film 12. The release film 24 is provided on the surface of the transparent adhesive layer 22, as necessary.

The antireflection film 50 according to the fifth embodiment differs from the antireflection film 40 according to the fourth embodiment in that the antireflection film 50 has the protective film 28 on the surface of the low-refractive-index layer 16 with the adhesive layer 26 arranged therebetween, but is the same as the antireflection film 40 in the other aspects, and descriptions of the same structure are omitted.

The protective film 28 functions to prevent the surface of the low-refractive-index layer 16 from being damaged when the antireflection film 50 is handled in continuous processing such as a roll process or when the antireflection film 50 is attached to a display, for example. The protective film 28 is attached to the surface of the low-refractive-index layer 16 with the adhesive layer 26 arranged therebetween. The protective film 28 is separated from the surface of the low-refractive-index layer 16 together with the adhesive layer 26 after the processing of the antireflection film 50. Therefore, the adhesive layer 26 is adjusted to have adhesive force acting between the protective film 28 and the adhesive layer 26 stronger than that acting between the low-refractive-index layer 16 and the adhesive layer 26, so that the antireflection film 50 can be divided at an interface between the low-refractive-index layer 16 and the adhesive layer 26. In the antireflection film 50 according to the present embodiment, the water contact angle of the surface of the antireflection film 50 is defined with respect to the surface thereof from which the protective film 28 and the adhesive layer 26 are removed, and the water contact angle on the surface from which the protective film 28 and the adhesive layer 26 are removed is 100° or larger.

The materials constituting the protective film 28 can be selected appropriately from the examples of the materials for forming the substrate film 12. The thickness of the protective film 28 is not particularly limited, but can be set within a range of 2 µm or larger to 500 µm or smaller, or within a range of 2 µm or larger to 200 µm or smaller.

An adhesive layer described in Patent Document 1 can be applied preferably as the adhesive layer 26. An adhesive agent that forms the adhesive layer 26 is not particularly limited, but is preferably an acrylic-based adhesive, a silicone-based adhesive, or a urethane-based adhesive. In particular, the acrylic-based adhesive has excellent transparency and heat resistance, and therefore is preferable. The acrylic-based adhesive is made preferably of an adhesive composition that contains a (meth)acrylic polymer and a crosslinking agent.

The (meth)acrylic polymer is a homopolymer or copolymer of (meth)acrylic monomers. Examples of the (meth)acrylic monomers include alkyl group-containing (meth)acrylic monomers, carboxyl group-containing (meth)acrylic monomers, and hydroxyl group-containing (meth)acrylic monomers.

Examples of the crosslinking agent include an isocyanate-based crosslinking agent, an epoxy-based crosslinking agent, a metal chelate-based crosslinking agent, a metal alkoxide-based crosslinking agent, a carbodiimide-based crosslinking agent, an oxazoline-based crosslinking agent, an aziridine-based crosslinking agent, and a melamine-based crosslinking agent. Any one of or a combination of two or more of these may be used as the crosslinking agent.

The adhesive composition may contain other additives in addition to the (meth)acrylic polymer and the crosslinking agent. Examples of other additives include a crosslinking accelerator, a crosslinking retardant, a tackifying resin (i.e., a tackifier), an antistatic agent, the silane coupling agent, the plasticizer, a peeling aid, a pigment, a dye, a wetting agent, a thickener, a UV absorber, a preservative, an antioxidant, a metal deactivator, an alkylating agent, and the flame retardant. These may be appropriately selected and used depending on the application and purpose of the adhesive agent.

The thickness of the adhesive layer 26 is not particularly limited, but is preferably within a range of 1 µm or larger to 10 µm or smaller. The thickness is more preferably within a range of 2 µm or larger to 7 µm or smaller.

Although embodiments of the present invention have been described, the present invention is not limited to the embodiments described above, and various changes can be made within a scope not departing from the gist of the present invention.

For example, as described for the embodiments described above, the surface treatment may be applied to the surface of the substrate film 12, but adhesion-enhancing layer may be provided on the surface of the substrate film 12, instead of the surface treatment.

As shown in Figure 3, the high-refractive-index layer 15 according to the third embodiment is added to the antireflection film 10 according to the first embodiment shown in Figure 1, but may also be added to the antireflection film 20 according to the second embodiment shown in Figure 2. Furthermore, as shown in Figure 4, the transparent adhesive layer 22 and the release film 24 are added to the antireflection film 10 according to the first embodiment shown in Figure 1, but may also be added to the antireflection film 20 according to the second embodiment shown in Figure 2 or the antireflection film 30 according to the third embodiment shown in Figure 3. Furthermore, as shown in Figure 5, the adhesive layer 26 and the protective film 28 are added to the antireflection film 40 according to the fourth embodiment shown in Figure 4, but may be added to the antireflection film 10 according to the first embodiment shown in Figure 1, the antireflection film 20 according to the second embodiment shown in Figure 2, or the antireflection film 30 according to the third embodiment shown in Figure 3. When the adhesive layer 26 and the protective layer 28 are added to the antireflection film 20 according to the second embodiment, the adhesive layer 26 is adjusted to have adhesive force acting between the protective film 28 and the adhesive layer 26 stronger than that acting between the antifouling layer 18 and the adhesive layer 26, so that the antireflection film 20 can be divided at an interface between the antifouling layer 18 and the adhesive layer 26.

Furthermore, various functional layers such as a layer improving gas-barrier property, an antistatic layer, and an oligomer block layer may be provided on the surface of the substrate film 12 in advance to the formation of the respective layers. An antistatic layer described in Patent Document 1 can be applied preferably as the antistatic layer in the present invention.

### EXAMPLE

The following describes the present invention in detail using examples and comparative examples. Unless otherwise specified, samples were prepared and evaluated at room temperature and in air.

### <Preparation of Composition for forming Hard Coat Layer>

A composition for forming a hard coat layer was prepared by adding a photopolymerization initiator "Omnirad 127" (manufactured by IGM Resins B.V.) to an ultraviolet curable resin composition "ESS-620" (manufactured by DIC Corporation; urethane acrylate resin, and solvent (ethyl acetate); solid content concentration: 79 mass%) such that an amount of the photopolymerization initiator was 3 mass% relative to the total amount of the hard coat layer forming composition. Furthermore, ethyl acetate was added such that the solid content concentration became 31 mass%.

### <Preparation of Composition for forming High-Refractive-Index Layer>

A composition for forming a high-refractive-index layer was prepared by adding methyl ethyl ketone to an ultraviolet curable resin composition "TYZ65-01"(manufactured by TOYOCHEM Co., Ltd.; acrylic-based resin, zirconium oxide (average particle size: 80 nm), photopolymerization initiator ("Omnirad 127" mentioned above), and solvent (cyclohexanone, methyl isobutyl ketone, and propylene glycol monomethyl ether); solid content concentration: 35 mass%) such that the solid content concentration became 8 mass%.

### <Preparation of Alumina Particles Surface-Treated with Silane Coupling Agent Having Reactive Group>

25 g of non-surface-treated alumina particles (average particle size: 160 nm), 2.5 g of a silane coupling agent ("KBM-5103", manufactured by Shin-Etsu Chemical Co., Ltd., 3-acryloxypropyltrimethoxysilane), and 72.5 g of propylene glycol monomethyl ether were put into a 500 ml stainless steel pot, and mixed and dispersed at 4,000 rpm for 30 minutes using a homomixer ("Homomixer MARKII 2.5 type", manufactured by PRIMIX Corporation) to obtain alumina particle dispersion 1 that was surface-treated with a silane coupling agent having a acryloyl group as a reactive group.

### <Preparation of Composition for forming Low-Refractive-Index Layer >

A composition for forming a low-refractive-index layer was prepared by blending a binder resin, inorganic oxide particles, hollow silica particles, a fluorine-containing compound (for Example 2 and Comparative Example 2 only), and a photopolymerization initiator at a blending ratio (in mass% relative to the total solid content) shown in Table 1 to obtain a composition and by adjusting the solid content concentration to that shown in Table 1 with a solvent (having a composition of MEK/PGM=1/3).

The following materials were used as materials of the low-refractive-index layer forming composition.

Binder resin: "ARONIX MT-3041", manufactured by TOAGOSEI Co., Ltd., multifunctional acrylate, solid content concentration: 100 mass%.

Hollow silica particles: "THRULYA 4320", manufactured by JGC Catalysts and Chemicals Ltd., average particle size: 60 nm, solution: MIBK, solid content concentration: 20 mass%.

Alumina particles 1: Alumina Particle Dispersion 1 mentioned above.

Alumina particles 2: ALUMINASOL "Lioduras KT-110AL", manufactured by TOYOCHEM Co., Ltd.; alumina particles (average particle size: 110 nm, non-surface-treated): 25 mass%, photosensitive monomers and resin: 15 mass%, and solvent (having compositions of MEK, cyclohexanone, and aliphatic solvent).

Fluorine-containing (meth)acrylate: "KY-1216", manufactured by Shin-Etsu Chemical Co., Ltd.; perfluoroether group-containing (meth)acrylate, and methyl ethyl ketone; solid content concentration: 20 mass%.

Photopolymerization initiator: "Omnirad 127" mentioned above.

### <Preparation of Composition for forming Antifouling Layer>

A composition for forming an antifouling layer was prepared by blending a fluorine-containing compound (i.e., "KY-1216" mentioned above) and a photopolymerization initiator (i.e., "Omnirad 127" mentioned above) at a blending ratio (i.e., mass% relative to the total solid content) shown in Table 1 to obtain a composition, and by adjusting the solid content concentration to that shown in Table 1 with solvent (having a composition of MEK/PGM=1/3).

### <Formation of Hard Coat Layer>

A hard coat layer (having a thickness of 4 µm) was formed by applying the composition for forming the hard coat layer over a substrate film (i.e., polyethylene terephthalate film "Lumirror #50-U403", manufactured by Toray Industries, thickness: 50 µm) using a #12 wire bar, drying the composition at 80°C for 60 seconds, and then irradiating the composition with ultraviolet rays with a light quantity of 200 mJ/cm² using a high-pressure mercury lamp for each one of Examples 1 and 2 and Comparative Examples 1 to 3.

### <Formation of High-Refractive-Index Layer>

A high-refractive-index layer (having a thickness of 110 nm) was formed by applying the composition for forming the high-refractive-index layer over a surface of the hard coat layer, drying the composition at 80°C for 60 seconds, and then irradiating the composition with ultraviolet rays with a light quantity of 200 mJ/cm² using the high-pressure mercury lamp in a nitrogen atmosphere for each one of Examples 1 and 2 and Comparative Examples 1 to 3.

### <Formation of Low-Refractive-Index Layer>

A low-refractive-index layer was formed by applying the composition for forming the low-refractive-index layer over a surface of the high-refractive-index layer using a #3 wire bar, drying the composition at 100°C for 60 seconds, and then irradiating the composition with ultraviolet rays with a light quantity of 200 mJ/cm² using the high-pressure mercury lamp in a nitrogen atmosphere for each one of Examples 1 and 2 and Comparative Examples 1 to 3. The thickness of the low-refractive-index layer is as shown in Table 1.

### <Formation of Antifouling Layer>

An antifouling layer was formed by applying the composition for forming the antifouling layer over a surface of the low-refractive-index layer using the #3 wire bar, drying the composition at 100°C for 60 seconds, and then irradiating the composition with ultraviolet rays with a light quantity of 200 mJ/cm² using the high-pressure mercury lamp in a nitrogen atmosphere for each one of Example 1 and Comparative Example 1. The thickness of the antifouling layer is as shown in Table 1. Antifouling layers were not prepared for Example 2 and Comparative Examples 2 and 3.

Thus, antireflection films according to Examples 1 and 2 and Comparative Examples 1 to 3 were prepared.

### <Evaluation Method>

### (Thickness and Refractive Index of Each Layer)

The thicknesses and the refractive indexes of the hard coat layer, the high-refractive-index layer, the low-refractive-index layer, and the antifouling layer were evaluated for each sample. Specifically, each time that a layer was formed, the thickness and the refractive index at a wavelength of 589.3 nm were obtained by measuring a reflection spectrum in the wavelength range of 380 to 780 nm using a microspectroscopic film thickness meter ("OPTM-F1", manufactured by Otsuka Electronics Co., Ltd.), then performing curve fitting between the obtained spectrum and a theoretical spectrum derived based on the Fresnel equation, using the least-squares method.

### (Luminous Reflectance)

For each of the prepared antireflection films, a luminous reflectance was evaluated. Specifically, the rear surface of the prepared antireflection film (i.e., the surface of the substrate film opposite to the surface thereof covered with the low-refractive-index layer) was roughed using sandpaper #400 and painted with a black paint, then the 5° specular reflectance was measured for the antireflection film in the wavelength range of 380 to 780 nm, using an ultraviolet-visible-near infrared spectrophotometer ("UV-3600", manufactured by SHIMADZU CORPORATION). The luminous reflectance of each antireflection film was obtained by multiplying the measured value of the 5° specular reflectance of the antireflection film by a spectral luminous efficiency. If the luminous reflectance is 2.0% or lower, the antireflection properties can be regarded as sufficient.

### (Water Contact Angle)

Water contact angles on the surfaces of the manufactured antireflection films were measured. Each water contact angle was measured such that 4 µl of pure water was dropped onto a surface of each sample (i.e., the surfaces of the antifouling layers for Example 1 and Comparative Example 1, and the surfaces of the low-refractive-index layers for Example 2 and Comparative Examples 2 and 3) using a contact angle meter ("DropMaster DMo-502", manufactured by Kyowa Interface Science Co., Ltd.). If the water contact angle is 100° or larger, the water contact angle can be regarded as sufficiently large from the viewpoint of antifouling properties.

### (Wear Durability)

An eraser abrasion test was conducted for each sample to evaluate wear durability, using the water contact angle as an index.

The eraser abrasion test was conducted for each sample. At this time, an eraser (manufactured by Minoan, having a cylindrical shape with a contact surface of ϕ6 mm in diameter) for the eraser abrasion test was placed on the surface of the antireflective film of each sample and moved back and forth using a flat surface abrasion tester ("DAS-400", manufactured by Daiei Kagaku Seisakusho Co., Ltd.). The stroke length of a test table was set to 50 mm, the reciprocating speed of the test table was set to 30 times/minute, and a load of 1.0 kg was applied. The water contact angle of each sample was measured at every 100 times of reciprocation up to 500 times, and every 500 times of reciprocation after the 500th reciprocation, and the maximum number of time of reciprocation at which the water contact angle of 90° or larger was maintained was recorded as an evaluation value. If the evaluation value is 2000 times or more, the wear durability can be considered sufficient. Furthermore, if the evaluation value is 4000 times or more, the wear durability can be considered high. The measurement of the water contact angle was conducted by using the contact angle meter ("DropMaster DMo-502", manufactured by Kyowa Interface Science Co., Ltd.) such that 4 µl of pure water was dropped onto the surface of the antireflection film of each sample.

### (Solvent Resistance)

An eraser abrasion test was conducted for each sample under a presence of ethanol to evaluate solvent resistance, using the water contact angle as an index.

The eraser abrasion test was conducted for each sample. At this time, the eraser (manufactured by Minoan, having a cylindrical shape with a contact surface of ϕ6 mm in diameter) for the eraser abrasion test was placed on the surface of the antireflective film of each sample and moved back and forth for 1500 times using the flat surface abrasion tester ("DAS-400", manufactured by Daiei Kagaku Seisakusho Co., Ltd.). The stroke length of the test table was set to 50 mm, the reciprocating speed of the test table was set to 30 times/minute, and a load of 1.0 kg was applied. Before the start of the test and after every 200 times of reciprocation, 200 µl of ethanol was dropped onto an area of each sample where the eraser was in contact with the sample, using a micropipette. The contact angle was measured after 1500 times of reciprocation, and if it was decreased to smaller than 90°, the solvent resistance was evaluated as low (i.e., B). On the other hand, if the water contact angle was maintained to 90° or larger, the solvent resistance was evaluated as high (i.e., A). Furthermore, if the water contact angle was maintained at 90° or larger and no wear marks (i.e., changes in reflection characteristics at an area subjected to friction) were observed, the solvent resistance was evaluated as excellent (i.e., A+).

### (Scratch Resistance)

The steel wool test was conducted for each sample. At this time, "steel wool #0000" (manufactured by Nippon Steel Wool Co., Ltd.) fixed to a flat friction block having a size of 20 mm × 20 mm was placed on the surface of the antireflection film of each sample and moved back and forth, using the flat surface abrasion tester ("DAS-400", manufactured by Daiei Kagaku Seisakusho Co., Ltd.). The stroke length of the test table was set to 50 mm, the reciprocating speed of the test table was set to 60 times/minute, and a load of 1.5 kg was applied, then the test table was moved back and forth for 100 times. If a scratch with a length of 10 mm or larger was observed on the antireflection film after the test, the scratch resistance was evaluated as low (i.e., B). Furthermore, if a scratch with a length smaller than 10 mm was observed but no scratch with a length of 10 mm or larger was observed, the scratch resistance was evaluated as high (i.e., A). A scratch with a length smaller than 10 mm has no problem in practical use. Furthermore, if no scratch was observed, the scratch resistance was evaluated as very high (i.e., A+).

### <Evaluation Results>

Table 1 shows evaluation results of Examples 1 to 2 and Comparative Examples 1 to 3 along with the compositions of the low-refractive-index layers and the antifouling layers (unit: mass% relative to the total solid content of each layer) and layer structures of the antireflection films.

### [Table 1]

**[Table 1]**

| | | | Examples | | Comparative Examples | | |
|---|---|---|---|---|---|---|---|
| | | | 1 | 2 | 1 | 2 | 3 |
| Composition of Low-Refreactive-Index Layer (mass%) | | | | | | | |
| | Binder Resin | | 55 | 47 | 55 | 47 | 55 |
| | Hollow Silica Particles | | 36 | 36 | 36 | 36 | 36 |
| | Alumina Particles 1 | | 4 | 4 | - | - | 4 |
| | Alumina Particles 2 | | - | - | 4 | 4 | - |
| | Fluorine-Containing (Meth)Acrylate | | - | 8 | - | 8 | - |
| | Polymerization Initiator | | 5 | 5 | 5 | 5 | 5 |
| | Solid Content Concentration(%) | | 3 | 3 | 3 | 3 | 3 |

| Composition of Antifouling Layer (mass%) | | | | | | | |
|---|---|---|---|---|---|---|---|
| | Fluorine-Containing (Meth)Acrylate | | 93 | - | 93 | - | - |
| | Polymerization Initiator | | 7 | - | 7 | - | - |
| | Solid Content Concentration(%) | | 0,35 | - | 0,35 | - | - |

| Layer Structure | | | | | | | |
|---|---|---|---|---|---|---|---|
| | Substrate Film | Thickness (µm) | 50 | 50 | 50 | 50 | 50 |
| | Hard Coat Layer | Refractive Index | 1,52 | 1,52 | 1,52 | 1,52 | 1,52 |
| | | Thickness (µm) | 4,0 | 4,0 | 4,0 | 4,0 | 4,0 |
| | High-Refractive-Index Layer | Refractive Index | 1,68 | 1,68 | 1,68 | 1,68 | 1,68 |
| | | Thickness (µm) | 110 | 110 | 110 | 110 | 110 |
| | Low-Refractive-Index Layer | Refractive Index | 1,43 | 1,43 | 1,43 | 1,43 | 1,43 |
| | | Thickness (µm) | 85 | 92 | 85 | 90 | 85 |
| | Antifouling Layer | Refractive Index | 1,45 | - | 1,45 | - | - |
| | | Thickness (µm) | 5 | - | 5 | - | - |

| Evaluation | | | | | | | |
|---|---|---|---|---|---|---|---|
| | Water Contact Angle (deg) | | 111 | 110,9 | 111 | 111 | 53,1 |
| | Wear Durability | | 7000 | 4000 | 200 | 100 | <100 |
| | Solvent Resistance | | A+ | A | B | B | B |
| | Scratch Resistance | | A+ | A+ | A | A | B |
| | Luminous Reflectance(%) | | 0,8 | 0,8 | 0,8 | 0,8 | 0,8 |

As shown in Table 1, in each of Examples 1 to 2, the water contact angle on the surface of the antireflection film was 100° or larger, which shows that the antireflection films have high antifouling properties. Furthermore, in each of Examples 1 to 2, high abrasion resistance with an evaluation value of 2000 times or more, and high solvent resistance evaluated as "A+" or "A" were obtained. At the same time, high scratch resistance evaluated as "A+" was obtained. This can be because the composition for forming the low-refractive-index layer contains the alumina particles surface-treated with the silane coupling agent having the reactive group capable of bonding to the (meth)acrylate compound, in addition to the (meth)acrylate compound having the reactive group and hollow silica particles.

Among these examples, Example 1 has particularly high solvent resistance evaluated as "A+". This corresponds to the fact that the film of Example 1 has the antifouling layer consisting of the cured product of a composition containing the fluorine-containing (meth)acrylate, covering a surface of the low-refractive-index layer.

On the other hand, Comparative Examples 1 and 2 differ from Examples 1 and 2, respectively, in that the alumina particles contained in the low-refractive-index layers were not surface-treated with the silane coupling agent having the reactive group capable of bonding to the (meth)acrylate compound. This leads to low wear durability and solvent resistance of Comparative Examples 1 and 2.

In Comparative Example 3, the water contact angle on the surface of the antireflection film is smaller than 100°, which shows that the antireflection film has low antifouling properties. Furthermore, the antireflection film in Comparative Example 3 has also insufficient wear durability, solvent resistance, and scratch resistance.

As described above, the antireflection film includes the substrate film, the hard coat layer covering the surface of the substrate film, and the low-refractive-index layer covering the surface of the hard coat layer, or moreover, the antireflection film including the antifouling layer covering the surface of the low-refractive-index layer. Furthermore, the antireflection film is formed of the cured product of the ionizing radiation curable composition containing the (meth)acrylate compound having the reactive group, the hollow silica particles, and the alumina particles surface-treated with the silane coupling agent having the reactive group capable of bonding to the (meth)acrylate compound. Furthermore, the water contact angle on the surface of the antireflection film is 100° or larger. By preparing the antireflection film to have the features mentioned above, the antireflection film can have excellent antifouling properties, scratch resistance, along with high wear durability and solvent resistance, and can withstand friction with a cloth or fingers wet with solvent such as alcohol.

The foregoing description has been presented for a detailed illustration of the embodiments of the present invention; however, the present invention is not limited by the above-described embodiments, and modifications and variations are possible as long as they do not deviate from the principles of the present invention.

### LIST OF REFERENCE NUMERALS

- 10, 20, 30, 40 and 50: Antireflection film
- 12: Substrate film
- 14: Hard coat layer
- 15: High-refractive-index layer
- 16: Low-refractive-index layer
- 18: Antifouling layer
- 22: Transparent adhesive layer
- 24: Release film
- 26: Adhesive layer
- 28: Protective film

## Claims

1. An antireflection film comprising:
a substrate film;
a hard coat layer covering a surface of the substrate film; and
a low-refractive-index layer covering a surface of the hard coat layer, wherein
the low-refractive-index layer comprises a cured product of an ionizing radiation curable composition comprising:
a (meth)acrylate compound comprising a reactive group;
hollow silica particles; and
alumina particles surface-treated with a silane coupling agent comprising a reactive group capable of bonding to the (meth)acrylate compound, and
the antireflection film has a water contact angle of 100° or larger on a surface thereof.

2. The antireflection film according to Claim 1, wherein the ionizing radiation curable composition contained in the low-refractive-index layer further comprises a fluorine-containing (meth)acrylate.

3. An antireflection film comprising:
a substrate film;
a hard coat layer covering a surface of the substrate film;
a low-refractive-index layer covering a surface of the hard coat layer; and
an antifouling layer covering a surface of the low-refractive-index layer, wherein
the low-refractive-index layer comprises a cured product of an ionizing radiation curable composition comprising:
a (meth)acrylate compound comprising a reactive group;
hollow silica particles; and
alumina particles surface-treated with a silane coupling agent comprising a reactive group capable of bonding to the (meth)acrylate compound,
the antifouling layer comprises a cured product of an ionizing radiation curable composition comprising a fluorine-containing (meth)acrylate, and
the antireflection film has a water contact angle of 100° or larger on a surface thereof.

4. The antireflection film according to Claim 3, wherein the antifouling layer contains the fluorine-containing (meth)acrylate of 90 mass% or larger of a total solid content of the antifouling layer.

5. The antireflection film according to Claim 3 or 4, wherein the low-refractive-index layer does not comprise a fluorine-containing (meth)acrylate.
